# EUROPÄISCHE PATENTSCHRIFT

(11) **EP 1 189 741 B1**
(45) Veröffentlichungstag und Bekanntmachung des Hinweises auf die Patenterteilung: **31.03.2004**
(21) Anmeldenummer: 00903543.7
(22) Anmeldetag: 15.01.2000
(51) Int. Cl.: B29C 49/70, B29C 49/64

(54) **VERFAHREN UND VORRICHTUNG ZUR BLASFORMUNG VON BEHÄLTERN**
METHOD AND DEVICE FOR BLOW-MOULDING CONTAINERS
PROCEDE ET DISPOSITIF POUR LE MOULAGE PAR SOUFFLAGE DE CONTENANTS

(30) Priorität: 05.03.1999 DE 19909644
(43) Veröffentlichungstag der Anmeldung: 27.03.2002
(73) Patentinhaber: SIG Corpoplast GmbH & Co. KG, 22145 Hamburg (DE)
(72) Erfinder: LITZENBERG, Michael, D-21502 Geesthacht (DE); MÜLLER, Hartwig, D-22952 Lütjensee (DE); KLATT, Dieter, D-22147 Hamburg (DE); LINKE, Michael, D-22926 Ahrensburg (DE)
(74) Vertreter: Klickow, Hans-Henning, Dr.-Ing.
(86) Internationale Anmeldenummer: PCT/DE2000/000163
(87) Internationale Veröffentlichungsnummer: WO 2000/053396

(56) Entgegenhaltungen:
- EP-A- 0 606 496
- DE-A- 1 479 444
- DE-A- 19 615 269
- FR-A- 531 954
- GB-A- 2 004 805

## Beschreibung

Die Erfindung betrifft ein Verfahren zur Blasformung von Behältern aus einem thermoplastischen Kunsstoff, bei dem der Behälter innerhalb einer Blasform, die im Bereich einer Blasstation positioniert ist, durch Einwirkung eines unter Druck stehenden Mediums aus einem Vorformling gefertigt wird und bei dem als Blasform mindestens zwei Blasformsegmente sowie ein Bodeneinsatz verwendet werden.

Die Erfindung betrifft darüber hinaus eine Vorrichtung zur Blasformung von Behältern aus einem thermoplastischen Kunststoff, die mindestens eine Blasstation mit mindestens einer Blasform aufweist, die aus mindestens zwei Blasformsegmenten und einem Bodeneinsatz ausgebildet ist sowie bei der der Bodeneinsatz relativ zu den Blasformsegmenten positionierbar angeordnet ist.

Bei einer derartigen Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Aus der FR-A-53 19 54 ist es bereits bekannt, Flaschen aus Glas ausgehend von einem Vorformling zu blasen. Die Blasstation besteht aus mehreren Formsegmenten und die geblasene Flasche kann gemeinsam mit einem Bodeneinsatz aus der geöffneten Blasform herausgehoben werden, um eine Flaschenentnahme zu unterstützen.

In der EP-A-0 606 496 wird eine Kühleinrichtung beschrieben, in die Flaschen aus thermoplastischem Kunststoff nach ihrer Entnahme aus einer Blasform eingesetzt werden können, um eine Nachkühlung durchzuführen.

Eine separate Kühleinrichtung zur Nachkühlung von Behältern, die aus einer zugeordneten Blasform entnommen wurden, wird auch in der DE-A-196 15 269 beschrieben. Die Nachkühlvorrichtung ist hier plattenartig ausgebildet.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Bei Vorrichtungen zur Verarbeitung von thermoplastischen Kunststoffen werden typischerweise Formen verwendet, die zur Gewährleistung kurzer Prozeßzyklen geeignet temperiert werden müssen. Häufig erfolgt nicht nur eine Temperierung auf ein vorgegebenes Temperaturniveau, sondern in Abhängigkeit von den jeweiligen Verfahrensschritten wird die Form zunächst beheizt und nach einer Beendigung des Einbringens beziehungsweise der Verformung des thermoplastischen Kunststoffes gekühlt, um möglichst schnell eine Formbeständigkeit des Kunststoffteiles zu erreichen.

Als Temperiermedien werden typischerweise öle oder Wasser eingesetzt. Diese flüssigen Temperiermedien durchströmen die zu temperierenden Teile im Bereich von Temperiermittelkanälen. Ein Wärmeübergang erfolgt durch einen Kontakt des Temperiermittels mit der Wandung des Temperiermittelkanales. Der Wirkungsgrad beim jeweiligen Wärmeübergang ist abhängig von der Temperaturdifferenz zwischen der Temperatur der Kanalwandung und der Temperatur des Temperiermittels in einer Umgebung der Wandung.

Zur Erreichung günstiger Produktionspreise wird angestrebt, die Blasmaschinen mit möglichst hoher Durchsatzrate zu betreiben. Die Durchsatzrate wird abgesehen von der mechanischen Belastbarkeit der verwendeten Bauelemente wesentlich von der Prozeßzeit bestimmt, die zur Umformung der Vorformlinge in die Behälter erforderlich ist. Insbesondere ist hierbei zu berücksichtigen, daß eine Abstützung der Behälter solange erforderlich ist, bis eine ausreichende Materialabkühlung und Materialverfestigung eingetreten ist, um eine unbeabsichtige Materialverformung zu vermeiden, die zu Abweichungen von der gewünschten Behälterkontur führen könnte. Die geblasenen Behälter werden deshalb solange in der Blasform belassen und mit ihrem Innendruck gegen die Formwandung gedrückt, bis zumindest die äußeren Materialbereiche eine ausreichende Abkühlung erfahren haben.

Aufgabe der vorliegenden Erfindung ist es, ein Verfahren der einleitend genannten Art derart zu verbessern, daß eine erhöhte Produktionsgeschwindigkeit unterstützt wird.

Diese Aufgabe wird erfindungsgemäß dadurch gelöst, daß nach einer Expansion des Vorformlings zum Behälter mindestens ein Teil der Blasform gemeinsam mit dem geblasenen Behälter aus der Blasstation entnommen wird und daß ein Kontakt zwischen diesem Teil der Blasform und dem Behälter bis zum Erreichen einer Konturstabilität des Behälters fortgesetzt wird und daß mindestens zeitweilig der Bodeneinsatz gemeinsam mit dem Behälter eine Drehbewegung durchführt.

Weitere Aufgabe der vorliegenden Erfindung ist es, eine Vorrichtung der einleitend genannten Art derart zu konstruieren, daß je Zeiteinheit eine größere Anzahl von Behältern hergestellt werden können.

Diese Aufgabe wird erfindungsgemäß dadurch gelöst, daß der Bodeneinsatz mit einer Einrichtung zur Fixierung des Behälters derart versehen ist, daß der Behälter mindestens während eines Fixierungsintervalls gemeinsam mit dem Bodeneinsatz relativ zur Blasstation positionierbar ist und daß der Bodeneinsatz mit einer Schwenkeinrichtung gekoppelt ist.

Der Durchführung des Verfahrens liegt die Erkenntnis zugrunde, daß der geblasene Behälter im Bereich der Seitenwandungen aufgrund der geringen Wandstärke relativ schnell abkühlt und die erforderliche Formbeständigkeit erreicht, daß jedoch der Behälterboden aufgrund der dickeren Wandung eine längere Abkühlzeit erfordert. Durch das Herausnehmen des Behälters gemeinsam mit dem Bodeneinsatz aus dem Bereich der Blasstation und aufgrund der fortdauernden Abstützung des Behälterbodens durch den Bodeneinsatz wird der kritische Bodenbereich des Behälters ausreichend lange gekühlt. Andererseits steht jedoch die Blasstation bei Kombination mit einem anderen Bodeneinsatz, beziehungsweise nach Einsetzen einer Austauschform, bereits wieder für die Fertigung eines weiteren Behälters zur Verfügung. Mit einem relativ geringen zusätzlichen konstruktiven Aufwand kann durch dieses Verfahren sowie die zugehörige Vorrichtung der Produktionsdurchsatz um mindestens dreißig Prozent erhöht werden. Grundsätzlich ist es ebenfalls möglich, durch verlängerte effektive Kühlzeiten die Produktqualität bei gleichzeitig hoher Produktionsleistung zu verbessern.

Zur Verminderung der bei geschlossener Blasform erforderlichen Kühlzeiten wird vorgeschlagen, daß der Bodeneinsatz mit einer Kühlung gekoppelt ist.

Eine effektive Temperierung kann dadurch erreicht werden, daß der Bodeneinsatz thermisch mit Temperiermittelkanälen in Verbindung steht, die zur Führung eines Temperiermittels vorgesehen sind.

Zur Fixierung des Behälters im Bereich des Bodeneinsatzes bei gleichzeitiger Gewährleistung einer Beibehaltung der geblasenen Kontur wird vorgeschlagen, daß der Bodeneinsatz mit einer Saugeinrichtung gekoppelt ist.

Eine hohe Konturgenauigkeit des Behälterbodens durch eine Mehrzahl von Abstützungsstellen kann dadurch erreicht werden, daß im Bereich des Bodeneinsatzes eine Mehrzahl von Saugbohrungen angeordnet sind.

Ein einfacher Positioniervorgang der Bodeneinsätze kann dadurch erfolgen, daß der Bodeneinsatz mit einer Hubvorrichtung verbunden ist.

Eine weitere Positioniermöglichkeit für die Bodeneinsätze besteht darin, daß der Bodeneinsatz relativ zur Blasstation verschieblich angeordnet ist.

Eine typische Anwendung ist dadurch definiert, daß der positionierbare Bodeneinsatz im Bereich eines rotierenden Blasrades angeordnet ist.

Ebenfalls ist daran gedacht, daß der positionierbare Bodeneinsatz im Bereich einer stationären Blasstation angeordnet ist.

Eine Bereitstellung von Blasmaschinen mit sehr hoher Ausstoßleistung kann dadurch erreicht werden, daß der positionierbare Bodeneinsatz im Bereich einer Blasstation mit mindestens zwei Kavitäten zum gleichzeitigen Blasen von mehreren Behältern angeordnet ist.

In der Zeichnung sind Ausführungsbeispiele der Erfindung schematisch dargestellt. Es zeigen:
- Fig. 1:: Eine perspektivische Darstellung einer Blasstation zur Herstellung von Behältern aus Vorformlingen,
- Fig. 2:: einen Längsschnitt durch eine Blasform, in der ein Vorformling gereckt und expandiert wird,
- Fig. 3:: eine Skizze zur Veranschaulichung eines grundsätzlichen Aufbaus einer Vorrichtung zur Blasformung von Behältern,
- Fig. 4:: eine Prinzipdarstellung einer Blasstation mit zwei verschwenkbar angeordneten Bodeneinsätzen in einer Ausgangsposition,
- Fig. 5:: die Vorrichtung gemäß Fig. 4 nach einem gemeinsamen Anheben der Bodeneinsätze und eines geblasenen Behälter in der Blasstation,
- Fig. 6:: die Vorrichtung gemäß Fig. 5 nach einem teilweisen Verschwenken der angehobenen Bodenformen,
- Fig. 7:: die Vorrichtung gemäß Fig. 6 nach einem Ab schluß der Schwenkbewegung,
- Fig. 8:: die Vorrichtung gemäß Fig. 7 nach einem Absenken der Bodeneinsätze,
- Fig. 9:: die Vorrichtung gemäß Fig. 8 unmittelbar vor einer Trennung des ausreichend gekühlten Behälters vom oberen Bodeneinsatz
und
- Fig. 10:: eine teilweise Prinzipdarstellung einer Blas- maschine in einer Umgebung des Blasrades mit verschwenkbar angeordneten Bodeneinsätzen.

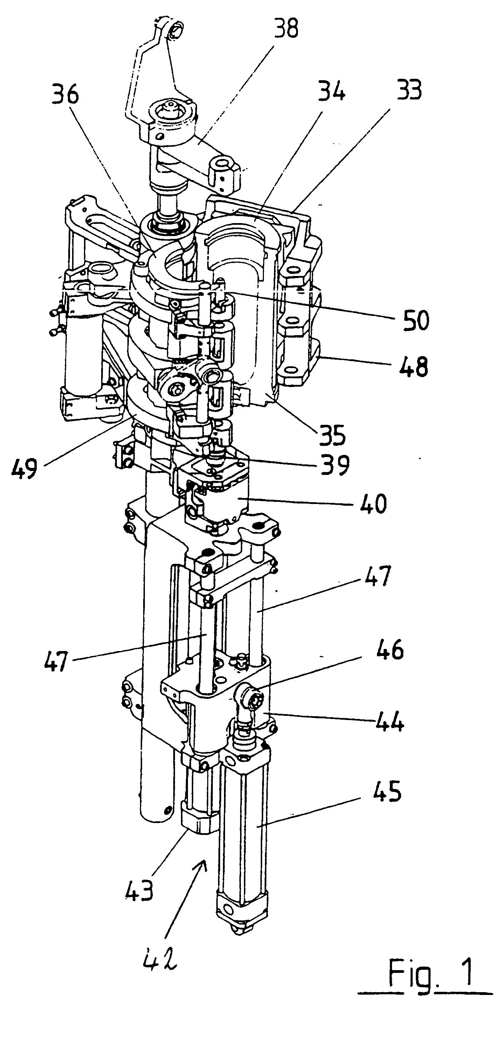

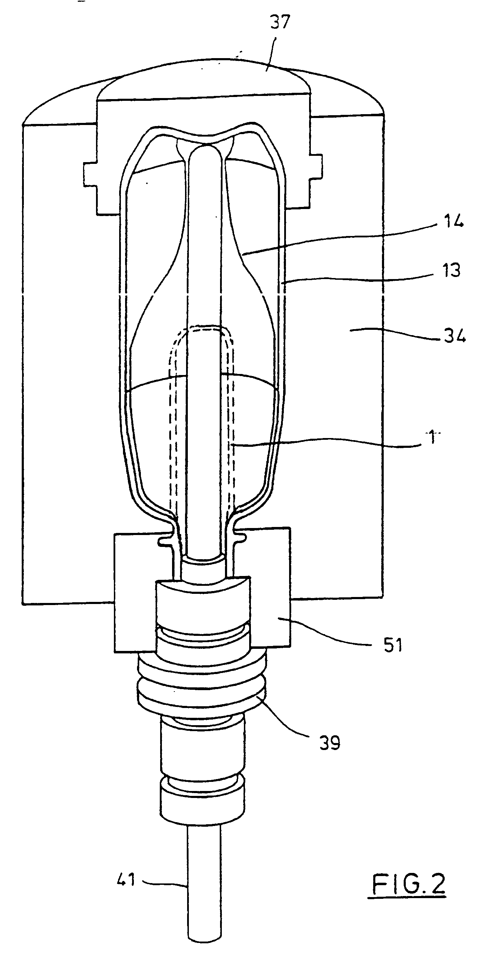

Der prinzipielle Aufbau einer Vorrichtung zur Umformung von Vorformlingen (1) in Behälter (13) ist in Fig. 1 und in Fig. 2 dargestellt.

Die Vorrichtung zur Formung des Behälters (13) besteht im wesentlichen aus einer Blasstation (33), die mit einer Blasform (34) versehen ist, in die ein Vorformling (1) einsetzbar ist. Der Vorformling (1) kann ein spritzgegossenes Teil aus Polyäthylenterephthalat sein. Zur Ermöglichung eines Einsetzens des Vorformlings (1) in die Blasform (34) und zur Ermöglichung eines Herausnehmens des fertigen Behälters besteht die Blasform (34) aus Formhälften (35,36) und einem Bodenteil (37), der von einer Hubvorrichtung (38) positionierbar ist. Der Vorformling (1) kann im Bereich der Blasstation (33) von einem Transportdorn (39) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (34) einzusetzen.

Zur Ermöglichung einer Druckluftzuleitung ist unterhalb des Transportdornes (39) ein Anschlußkolben (40) angeordnet, der dem Vorformling (1) Druckluft zuführt und gleichzeitig eine Abdichtung relativ zum Transportdorn (39) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (41), die von einem Zylinder (42) positioniert wird. Grundsätzlich ist es aber auch denkbar, eine mechanische Positionierung der Reckstange (41) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (33) auf einem rotierenden Blasrad angeordnet sind. Eine Verwendung von Zylindern (42) ist zweckmäßig, wenn ortsfest angeordnete Blasstationen (33) vorgesehen sind.

Bei der in Fig. 1 dargestellten Ausführungsform ist das Recksystem derart ausgebildet, daß eine Tandem-Anordnung von zwei Zylindern (42) bereitgestellt ist. Von einem Primärzylinder (43) wird die Reckstange (41) zunächst vor Beginn des eigentlichen Reckvorganges bis in den Bereich des Bodens (7) des Vorformlings (1) gefahren. Während des eigentlichen Reckvorganges wird der Primärzylinder (43) mit ausgefahrener Reckstange gemeinsam mit einem den Primärzylinder (43) tragenden Schlitten (44) von einem Sekundärzylinder (45) oder über eine Kurvensteuerung positioniert. Insbesondere ist daran gedacht, den Sekundärzylinder (45) derart kurvengesteuert einzusetzen, daß von einer Führungsrolle (46), die während der Durchführung des Reckvorganges an einer Kurvenbahn entlang gleitet, eine aktuelle Reckposition vorgegeben wird. Die Führungsrolle (46) wird vom Sekundärzylinder (45) gegen die Führungsbahn gedrückt. Der Schlitten (44) gleitet entlang von zwei Führungselementen (47).

Nach einem Schließen der im Bereich von Trägern (48,49) angeordneten Formhälften (35,36) erfolgt eine Verriegelung der Träger (48) relativ zueinander mit Hilfe einer Verriegelungseinrichtung (50).

Zur Anpassung an unterschiedliche Formen des Mündungsabschnittes (2) ist gemäß Fig. 2 die Verwendung separater Gewindeeinsätze (51) im Bereich der Blasform (34) vorgesehen.

Fig. 2 zeigt zusätzlich zum geblasenen Behälter (13) auch gestrichelt eingezeichnet den Vorformling (1) und schematisch eine sich entwickelnde Behälterblase (14).

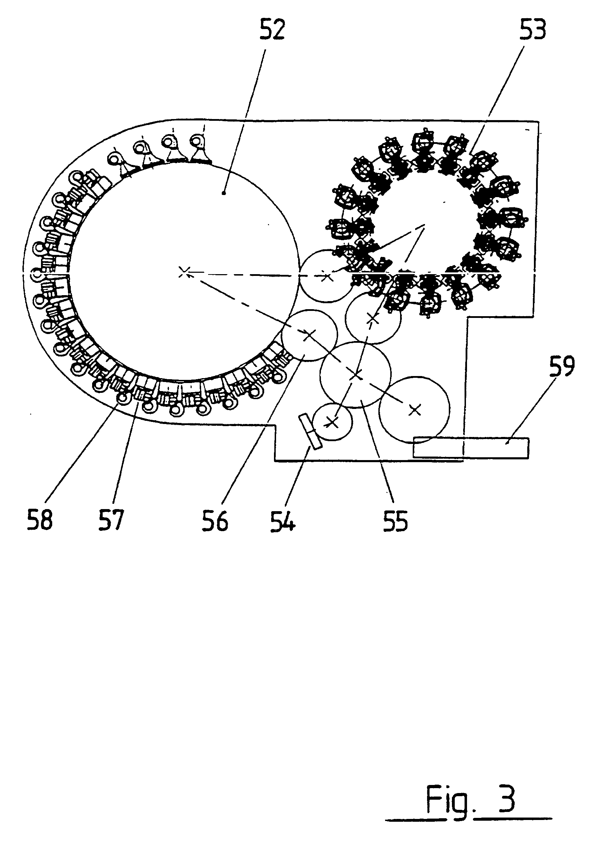

Fig. 3 zeigt den grundsätzlichen Aufbau einer Blasmaschine, die mit einem rotierenden Heizrad (52) sowie einem rotierenden Blasrad (53) versehen ist. Ausgehend von einer Vorformlingseingabe (54) werden die Vorformlinge (1) von Übergaberädern (55,56) in den Bereich des Heizrades (52) transportiert. Entlang des Heizrades (52) sind Heizstrahler (57) sowie Gebläse (58) angeordnet, um die Vorformlinge (1) zu temperieren. Nach einer ausreichenden Temperierung der Vorformlinge (1) werden diese an das Heizrad (52) übergeben, in dessen Bereich die Blasstationen (33) angeordnet sind. Die fertig geblasenen Behälter (13) werden von weiteren Übergaberädern einer Ausgabestrecke (59) zugeführt.

Um einen Vorformling (1) derart in einen Behälter (13) umformen zu können, daß der Behälter (13) Materialeigenschaften aufweist, die eine lange Verwendungsfähigkeit von innerhalb des Behälters (13) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

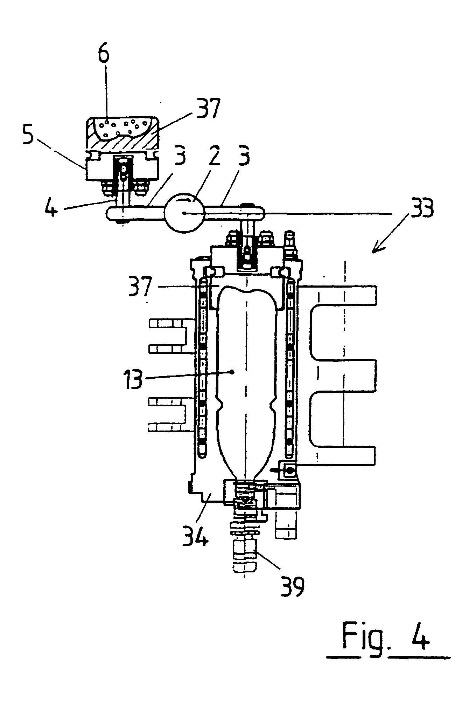

Fig. 4 zeigt eine Ausführungsform, bei der im Bereich der Blasstation (33) zwei Bodeneinsätze (37) relativ zu einem Drehgelenk (2) verschwenkbar angeordnet sind. Das Drehgelenk (2) ist mit der nicht dargestellten Hubvorrichtung (38) für die Bodeneinsätze (37) verbunden. Ein Abstand zum Drehgelenk (2) wird von Querstreben (3) vorgegeben, relativ zu denen sich im Bereich der dem Drehgelenk (2) abgewandten Enden im wesentlichen senkrecht jeweils ein Halterungsschaft (4) erstreckt. Die Halterungsschäfte (4) tragen Halterungssockel (5), auf denen die Bodeneinsätze (37) austauschbar fixiert sind.

Für die Bodeneinsätze (37) ist eine Kühlung vorgesehen. Insbesondere ist daran gedacht, innerhalb der Bodeneinsätze (37) Kühlkanäle anzuordnen, durch die ein Kühlmedium hindurchzirkuliert. Grundsätzlich ist es allerdings ebenfalls denkbar, lediglich den Halterungssockel (5) aktiv zu kühlen und eine Kühlung der Bodeneinsätze (37) durch wärmeleitenden Kontakt mit dem Halterungssockel (5) zu realisieren. Ergänzend ist es ebenfalls möglich, zeitlich alternierend eine Kühlung und eine Beheizung der Bodeneinsätze (37) durchzuführen.

Bei dem in Fig. 4 dargestellten Arbeitsschritt ist die Blasstation (33) geschlossen und der Behälter (13) ist bereits fertig geblasen. Von dem in lotrechter Richtung oben angeordneten Bodeneinsatz (37) wurde ein zuvor dort nachgekühlter Behälter (13) bereits entfernt.

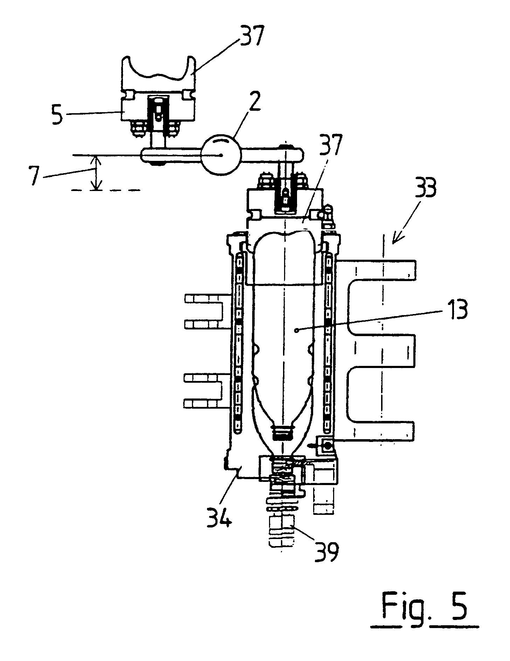

Bei dem in Fig. 5 dargestellten nachfolgenden Arbeitsschritt wird das Drehgelenk (2) von der Hubvorrichtung (38) angehoben. Hieraus resultiert ebenfalls ein Anheben der zugeordneten Bodeneinsätze (37). Vor dem Anheben des zuvor mit den Formhälften (35, 36) formschlüssig zusammengefügten Bodeneinsatz (37) wurde die Blasstation (33) zumindest soweit geöffnet, daß sowohl der Formschluß zwischen dem Bodeneinsatz (37) und der Blasstation (33) als auch ein möglicher Formschluß zwischen dem geblasenen Behälter (13) und den Formhälften (35, 36) aufgehoben ist. Ebenfalls wurde zuvor sichergestellt, daß der Behälter (13) gegen den gekühlten Bodeneinsatz (37) gedrückt wird.

Das Andrücken des Behälters (13) gegen den Bodeneinsatz (37) kann beispielsweise durch Unterdruckeinwirkung erfolgen. Gemäß der dargestellten Ausführungsform sind im Bereich der Bodeneinsätze (37) eine Mehrzahl von Bohrungen (6) vorgesehen, die an eine Unterdruckversorgung angeschlossen sind. Durch entsprechende Unterdruckeinwirkung wird der Behälter (13) hierdurch in den Bodeneinsatz (37) hineingesaugt. Grundsätzlich ist es aber ebenfalls denkbar, andere Mittel zur Fixierung des Behälters (13) im Bereich des Bodeneinsatzes (37) zu verwenden. Beispielsweise ist ein mechanisches Andrücken denkbar.

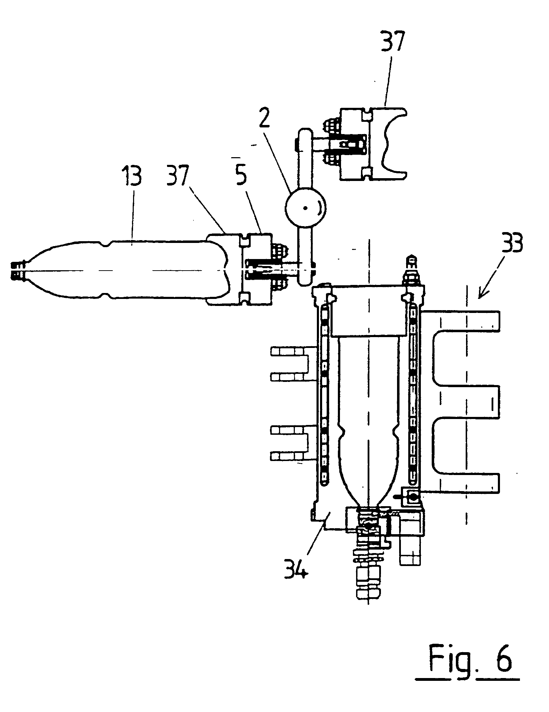

Bei dem in Fig. 6 dargestellten Arbeitsschritt wurden die Bodeneinsätze (37) bei geöffneter Blasstation (33) bereits um etwa 90° um das Drehgelenk (2) herum verschwenkt. Hierdurch wird der Bodeneinsatz (37) mit dem gehalterten Behälter (13) aus dem Bereich der Blasstation (33) entfernt und der freie Bodeneinsatz (37) wird in Richtung auf die Formhälften (35, 36) bewegt.

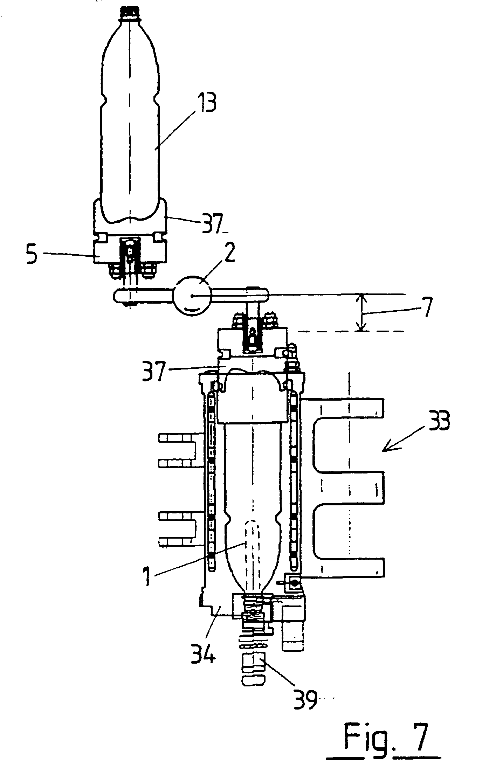

Bei dem in Fig. 7 dargestellten Arbeitsschritt ist die Schwenkbewegung der Bodeneinsätze (37) um das Drehgelenk (2) herum abgeschlossen, das Drehgelenk (2) ist jedoch noch von der Hubvorrichtung (38) angehoben. Innerhalb der Blasstation (33) ist bereits ein neuer Vorformling (1) positioniert.

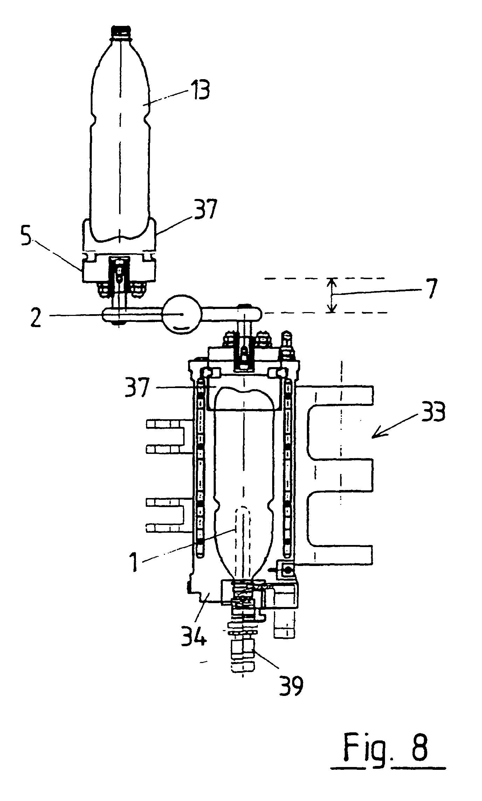

Gemäß dem Arbeitsschritt in Fig. 8 wurde der Bodeneinsatz (37) wieder abgesenkt und die Blasstation (33) wurde geschlossen. Während der zuletzt beschriebenen Arbeitsschritte in Fig. 5 bis Fig. 8 ist ein unmittelbarer wärmeleitender Kontakt zwischen dem geblasenen Behälter (13) und dem zugeordneten Bodeneinsatz (37) aufrechterhalten worden, so daß eine fortwährende Kühlung des Behälters (13) im Bodenbereich erfolgt ist. Durch die bereits erwähnte Unterdruckbeaufschlagung des Behälters (13) innerhalb des Bodeneinsatzes (37) wird gewährleistet, daß trotz einer zunächst noch weichen Materialkonsistenz die zuvor geblasene Bodenkontur beibehalten wird und daß während des Kühlvorganges keine unerwünschten Verformungen des Bodenbereiches eintreten.

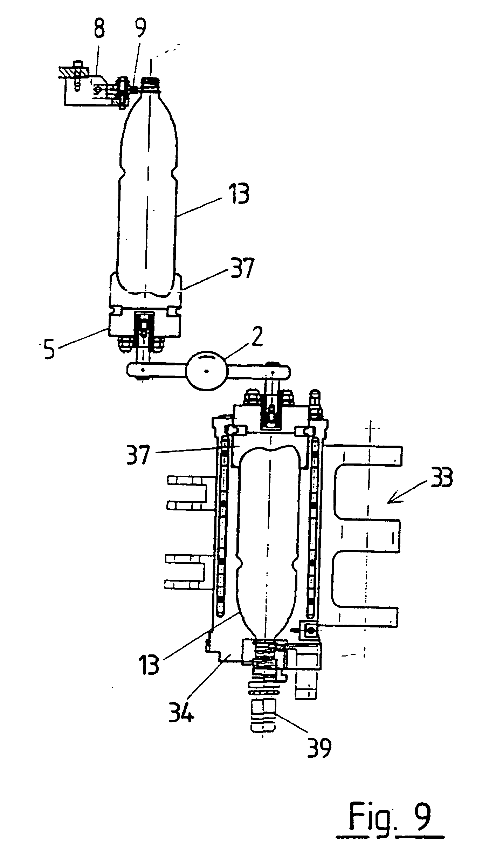

Bei dem in Fig. 9 dargestellten Arbeitsschritt wurde der Vorformling (1) gemäß Fig. 8 bereits wieder zu einem Behälter (13) aufgeblasen und der Kühlvorgang des Behälters (13) im Bereich des zweiten Bodeneinsatzes (37) ist abgeschlossen. Von einer Handhabungseinrichtung (8) kann der Behälter (13) deshalb vom Bodeneinsatz (37) entnommen werden. Die Handhabungseinrichtung (8) kann mit Greifzangen (9) ausgestattet sein, die den Behälter (13) im Bereich eines Behälterhalses umfassen. Zur Unterstützung eines Heraushebens des Behälters (13) aus dem Bodeneinsatz (37) ist die Handhabungseinrichtung (8) vorzugsweise höhenpositionierbar geführt.

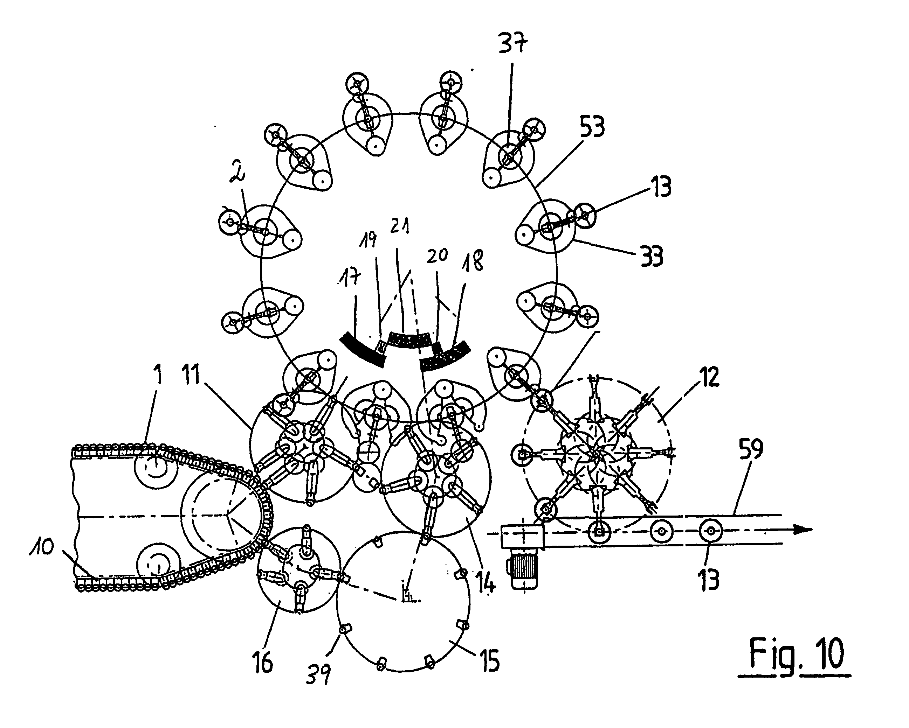

Fig. 10 zeigt die Anordnung von Blasstationen (33) mit verschwenkbar angeordneten Bodeneinsätzen (37) im Bereich einer Blasmaschine mit rotierendem Blasrad (53) bei einer gegenüber Fig. 3 abgewandelten Maschinenkonzeption. Statt des in Fig. 3 dargestellten Heizrades (52) ist eine kettenartige Vortriebseinrichtung (10) verwendet, um die Vorformlinge (1) entlang von verwendeten Heizeinrichtungen zu transportieren. Im Bereich der Heizeinrichtungen können die Vorformlinge (1) von den Transportdornen (39) getragen sein. Grundsätzlich ist aber auch eine Halterung über Zangen denkbar. Die temperierten Vorformlinge (1) werden von einem Übergaberad (11) an die Blasstationen (33) übergeben. Das Einsetzen der Vorformlinge (1) erfolgt vorzugsweise unmittelbar nach einem ausreichenden Herausschwenken des geblasenen Behälters (13) aus der Blasstation (33). Der hierdurch außenseitig zur Blasstation (33) angeordnete Behälter rotiert gemeinsam mit der Blasstation (33) für etwa dreiviertel des Umlaufweges des Blasrades (53). Vor einem erneuten Öffnen der Blasstation (33) wird der außenseitig geführte und im-Bodenbereich gekühlte Behälter (33) von einem Ausgaberad (12) zur Ausgabestrekke (59) überführt.

Bei Verwendung von Transportdornen (39) als Tragelemente zumindest für die Vorformlinge (1) ist es zweckmäßig, einen geschlossenen Umlaufweg für diese Transportdorne (39) bereitzustellen. Bei einer Übergabe von auf den Transportdornen (39) getragenen Vorformlingen (1) vom Übergaberad (11) an die Blasstation (33) werden nach einer Entnahme der geblasenen Behälter (13) aus der Blasstation (33) die Transportdorne (39) von einem Entnahmerad (14) aus den Blasstationen (33) herausgeführt und über Übergaberäder (15, 16) wieder in den Bereich der Heizeinrichtung zurückgeleitet. Im Bereich des Übergaberades (16) kann eine Bestückung der Transportdorne (39) mit den zu beheizenden Vorformlingen (1) erfolgen.

Im Bereich des Drehgelenkes (2) wird vorzugsweise ein Drehverteiler angeordnet, der sowohl das Kühlmedium als gegebenenfalls auch den zur Halterung des Behälters (13) eingesetzten Unterdruck in den Bereich der Bodeneinsätze (37) leitet. Das System für das Temperiermittel kann als Zweikreisanlage ausgebildet sein, um sowohl ein Erwärmen des Bodeneinsatzes (37) vor einem Blasen des Behälters (13) als auch das erforderliche Kühlen nach einer Anlage des Behälters (13) am Bodeneinsatz (37) durchzuführen. Hierfür ist eine Ausbildung als Zweikreissystem zweckmäßig.

Alternativ zu der in den Figuren dargestellten Verwendung einer horizontalen Drehachse im Bereich des Drehgelenkes (2) ist es auch möglich, andere Positioniereinrichtungen für die Bodeneinsätze (37) zu verwenden. Beispielsweise ist ein Verdrehen um eine vertikale Drehachse möglich. Ebenfalls ist es grundsätzlich möglich, dem Drehgelenk (2) mehr als zwei Bodeneinsätze (37) zuzuordnen, um eine weitere Verlängerung der möglichen Kühlzeit für den Behälterboden zu erreichen. Die in den Zeichnungen dargestellte Ausführungsform erweist sich jedoch insbesondere im Zusammenhang mit rotierenden Blasrädern (53) als zweckmäßig.

Zur Veranschaulichung der zeitlichen Zuordnungen der einzelnen Verfahrensschritte sind in Fig. 10 typische Funktionsintervalle gekennzeichnet. Insbesondere sind dies ein Schließintervall (17), während dessen Dauer die Blasstation (33) geschlossen wird, ein Öffnungsintervall (18) während dessen Dauer die Blasstation (33) geöffnet wird, ein Senkintervall (19) und ein Hubintervall (20), während deren Zeitdauern der Bodeneinsatz (37) abgesenkt mnbeziehungsweise angehoben wird und ein Schwenkintervall (21), während dessen Verlauf die Schwenkbewegung der Bodeneinsätze (37) um das Drehgelenk (2) herum erfolgt.

In Fig. 4 bis Fig. 9 wird eine Handhabung des Behälters (13) erläutert, bei der ein Anheben des Bodeneinsatzes (37) mittels der Hubvorrichtung (38) erfolgt. Ein derartiges Anheben ist zweckmäßig, wenn der Behälter (13) auf einem Transportdorn (39) getragen ist, der bereichsweise in die Mündung des Behälters (13) eingeführt ist beziehungsweise diese Mündung bereichsweise umgreift. Bei einer Handhabung des Behälters (13) und der Vorformlinge (1) durch von außen einwirkende Zangen oder Greifeinrichtungen ist es hingegen auch möglich, lediglich eine Schwenkbewegung für die Bodeneinsätze (37) ohne vorhergehendes Anheben vorzusehen.

Die im Hinblick auf die Figuren erläuterte Positionierung der Bodeneinsätze (37) in Kombination mit den geblasenen Behältern (36) relativ zu den im Bereich der Blasstation (33) belassenen Blasformsegmenten ist dann zweckmäßig, wenn eine Ausbildung der Blasformsegmente mit relativ hohem Gewicht vorliegt. Gemäß dem Stand der Technik ist jedoch auch bereits die Verwendung von Blasformsegmenten mit relativ geringem Gewicht bekannt, die in zugeordnete äußere Halterungs- und Stützsegmente eingesetzt werden. Bei einer Verwendung von Blasformsegmenten mit relativ geringem Gewicht ist es deshalb auch möglich, die Blasformsegmente gemeinsam mit dem Bodeneinsatz (37) und dem geblasenen Behälter (13) relativ zu den restlichen Bauteilen der Blasstation (33) zu positionieren. Gegebenenfalls könnte deshalb der Behälter (13) gemeinsam mit dem Bodeneinsatz (37) und den Blasformsegmenten, beziehungsweise mit Teilen dieser Segmente, aus dem Bereich der Blasstation (33) herausgeschwenkt, herausgeschoben, beziehungsweise herausgehoben oder abgesenkt werden. Die jeweils zu wählende konkrete Ausführungsform hängt von der jeweiligen Geometrie der Blasstation (33) sowie den konkreten Anwendungsanforderungen ab.

Grundsätzlich ist es ebenfalls denkbar, ohne Zwischenschaltung des Ausgaberades (12) unmittelbar die fertig gekühlten Behälter (13) in die Ausgabestrecke (59) zu überführen und hier beispielsweise durch Drucklufteinwirkung zu transportieren.

Die beschriebene Handhabung der Behälter (13) gemeinsam mit mindestens einem Teil der Blasform ist mit dem Vorteil verbunden, daß eine gerichtete Flaschenausgabe möglich ist, da die räumliche Positionierung des Behälters (13) exakt definiert ist. Alternativ ist es allerdings auch möglich, den Behälter (13) kurzzeitig aus der geöffneten Blasstation (34) zu entnehmen und in eine Hilfsform einzusetzen, die den Kühlvorgang fortsetzt. Der Umsetzvorgang müßte dabei allerdings so schnell durchgeführt werden, daß deutliche Materialverformungen durch Rückschrumpfung verhindert werden, oder daß zumindest durch entsprechende Einwirkung eine Deformierung rückgängig gemacht werden kann.

## Patentansprüche

1. Verfahren zur Blasformung von Behältern (13) aus einem thermoplastischen Kunststoff, bei dem der Behälter (13) innerhalb einer Blasform (34), die im Bereich einer Blasstation (33) positioniert ist, durch Einwirkung eines unter Druck stehenden Mediums aus einem Vorformling (1) gefertigt wird und bei dem als Blasform (34) mindestens zwei Blasformsegmente sowie ein Bodeneinsatz (37) verwendet werden, **dadurch gekennzeichnet, daß** nach einer Expansion des Vorformlings (1) zum Behälter (13) mindestens ein Teil der Blasform (34) gemeinsam mit dem geblasenen Behälter (13) aus der Blasstation (33) entnommen wird, daß ein Kontakt zwischen diesem Teil der Blasform (34) und dem Behälter (13) bis zum Ende einer Konturstabilität des Behälters (13) fortgesetzt wird und daß mindestens zeitweilig der Bodeneinsatz (37) gemeinsam mit dem Behälter (13) eine Drehbewegung durchführt.

2. Verfahren nach Anspruch 1, **dadurch gekennzeichnet, daß** der Bodeneinsatz (37) gekühlt wird.

3. Verfahren nach Anspruch 1 oder 2, **dadurch gekennzeichnet, daß** der Behälter (13) durch Unterdruckansaugung in Kontakt mit dem Bodeneinsatz (37) gebracht wird.

4. Verfahren nach einem der Ansprüche 1 bis 3, **dadurch gekennzeichnet, daß** der Unterdruck im Bereich einer Mehrzahl von Kontaktstellen auf den Behälter (13) einwirkt.

5. Verfahren nach einem der Ansprüche 1 bis 4, **dadurch gekennzeichnet, daß** mindestens zeitweilig der Bodeneinsatz (37) gemeinsam mit dem Behälter (13) eine Hubbewegung durchführt.

6. Verfahren nach einem der Ansprüche 1 bis 5, **dadurch gekennzeichnet, daß** der Bodeneinsatz (37) um eine im wesentlichen horizontal verlaufende Drehachse verschwenkt wird.

7. Verfahren nach einem der Ansprüche 1 bis 5, **dadurch gekennzeichnet, daß** der Bodeneinsatz (37) um eine im wesentlichen vertikal verlaufende Drehachse verschwenkt wird.

8. Verfahren nach einem der Ansprüche 1 bis 7, **dadurch gekennzeichnet, daß** bei Verwendung eines rotierenden Blasrades (53) mindestens zeitweilig eine gemeinsame Transportbewegung für einen innerhalb der Blasstation (33) angeordneten Behälter (13) während des Blasvorganges und für einen außerhalb der Blasstation (33) im Bereich des Bodeneinsatzes (37) angeordneten zu kühlenden Behälter (13) durchlaufen wird.

9. Vorrichtung zur Blasformung von Behältern (13) aus einem thermoplastischen Kunststoff, die mindestens eine Blasstation (33) mit mindestens einer Blasform (34) aufweist, die aus mindestens zwei Blasformsegmenten und einem Bodeneinsatz (37) ausgebildet ist sowie bei der der Bodeneinsatz (37) relativ zu den Blasformsegmenten positionierbar angeordnet ist, **dadurch gekennzeichnet, daß** der Bodeneinsatz (37) mit einer Einrichtung zur Fixierung des Behälters (13) derart versehen ist, daß der Behälter mindestens während eines Fixierungsintervalls gemeinsam mit dem Bodeneinsatz (37) relativ zur Blasstation (33) positionierbar ist und daß der Bodeneinsatz (37) mit einer Schwenkeinrichtung gekoppelt ist.

10. Vorrichtung nach Anspruch 9, **dadurch gekennzeichnet, daß** der Bodeneinsatz (37) mit einer Kühlung gekoppelt ist.

11. Vorrichtung nach Anspruch 9 oder 10, **dadurch gekennzeichnet, daß** der Bodeneinsatz (37) thermisch mit Temperiermittelkanälen in Verbindung steht, die zur Führung eines Temperiermittels vorgesehen sind.

12. Vorrichtung nach einem der Ansprüche 9 bis 11, **dadurch gekennzeichnet, daß** der Bodeneinsatz (37) mit einer Saugeinrichtung gekoppelt ist.

13. Vorrichtung nach Anspruch 12, **dadurch gekennzeichnet, daß** im Bereich des Bodeneinsatzes (37) eine Mehrzahl von saugbohrungen angeordnet sind.

14. Vorrichtung nach einem der Ansprüche 9 bis 13, **dadurch gekennzeichnet, daß** der Bodeneinsatz (37) mit einer Hubvorrichtung (38) verbunden ist.

15. Vorrichtung nach einem der Ansprüche 9 bis 14, **dadurch gekennzeichnet, daß** der Bodeneinsatz (37) relativ zur Blasstation (33) verschieblich angeordnet ist.

16. Vorrichtung nach einem der Ansprüche 9 bis 15, **dadurch gekennzeichnet, daß** der positionierbare Bodeneinsatz (37) im Bereich eines rotierenden Blasrades (53) angeordnet ist.

17. Vorrichtung nach einem der Ansprüche 9 bis 15, **dadurch gekennzeichnet, daß** der positionierbare Bodeneinsatz (37) im Bereich einer stationären Blasstation (33) angeordnet ist.

18. Vorrichtung nach einem der Ansprüche 9 bis 17, **dadurch gekennzeichnet, daß** der positionierbare Bodeneinsatz (37) im Bereich einer Blasstation (33) mit mindestens zwei Kavitäten zum gleichzeitigen Blasen von mehreren Behältern (13) angeordnet ist.

## Claims

1. Method for blow-moulding containers (13) made of a thermoplastic, in which the container (13) is produced from a preform (1) inside a blow mould (34), positioned in the region of a blowing station (33), by the action of a pressurised medium and in which at least two blow-mould segments and a bottom insert (37) are used as the blow mould (34), **characterised in that**, after expansion of the preform (1) to form the container (13), at least one part of the blow mould (34) is removed from the blowing station (33) together with the blown container (13), **in that** contact between this part of the blow mould (34) and the container (13) is maintained until contour stability of the container (13) is achieved, and **in that**, at least temporarily, the bottom insert (37) performs a rotary movement together with the container (13).

2. Method according to Claim 1, **characterised in that** the bottom insert (37) is cooled.

3. Method according to Claim 1 or 2, **characterised in that** the container (13) is brought into contact with the bottom insert (37) by suction produced by negative pressure.

4. Method according to one of Claims 1 to 3, **characterised in that** the negative pressure acts on the container (13) in the region of a plurality of contact points.

5. Method according to one of Claims 1 to 4, **characterised in that**, at least temporarily, the bottom insert (37) performs a lifting movement together with the container (13).

6. Method according to one of Claims 1 to 5, **characterised in that** the bottom insert (37) is pivoted about a substantially horizontally running axis of rotation.

7. Method according to one of Claims 1 to 5, **characterised in that** the bottom insert (37) is pivoted about a substantially vertically running axis of rotation.

8. Method according to one of Claims 1 to 7, **characterised in that**, when using a rotating blowing wheel (53), at least temporarily there takes place a joint transporting movement for a container (13) which is arranged inside the blowing station (33) during the blowing operation and for a container (13) which is arranged outside the blowing station (33) in the region of the bottom insert (37) and is to be cooled.

9. Apparatus for blow-moulding containers (13) made of a thermoplastic, which has at least one blowing station (33) with at least one blow mould (34) formed from at least two blow-mould segments and a bottom insert (37) and in which the bottom insert (37) is arranged such that it can be positioned relative to the blow-mould segments, **characterised in that** the bottom insert (37) is provided with a device for fixing the container (13), so that, at least during a period in which it is fixed, the container can be positioned together with the bottom insert (37) relative to the blowing station (33) and **in that** the bottom insert (37) is coupled to a pivoting device.

10. Apparatus according to Claim 9, **characterised in that** the bottom insert (37) is coupled to a cooling means.

11. Apparatus according to Claim 9 or 10, **characterised in that** the bottom insert (37) is thermally connected to temperature-control-medium channels which are provided for conveying a temperature-control medium.

12. Apparatus according to one of Claims 9 to 11, **characterised in that** the bottom insert (37) is coupled to a suction device.

13. Apparatus according to Claim 12, **characterised in that** a plurality of suction holes are arranged in the region of the bottom insert (37).

14. Apparatus according to one of Claims 9 to 13, **characterised in that** the bottom insert (37) is connected to a lifting device (38).

15. Apparatus according to one of Claims 9 to 14, **characterised in that** the bottom insert (37) is arranged such that it can be displaced relative to the blowing station (33).

16. Apparatus according to one of Claims 9 to 15, **characterised in that** the bottom insert (37) which can be positioned is arranged in the region of a rotating blowing wheel (53).

17. Apparatus according to one of Claims 9 to 15, **characterised in that** the bottom insert (37) which can be positioned is arranged in the region of a stationary blowing station (33).

18. Apparatus according to one of Claims 9 to 17, **characterised in that** the bottom insert (37) which can be positioned is arranged in the region of a blowing station (33) with at least two cavities for simultaneously blowing a plurality of containers (13).

## Revendications

1. Procédé pour le moulage par soufflage de récipients (13) à partir d'une matière synthétique thermoplastique, procédé dans lequel le récipient (13) est produit à partir d'une ébauche (1) à l'intérieur d'un moule de soufflage (34) qui est positionné dans la zone d'un poste de soufflage (33), sous l'action d'un milieu se trouvant sous pression, et dans lequel au moins deux segments de moule de soufflage ainsi qu'un insert de fond (37) sont utilisés en guise de moule de soufflage (34), **caractérisé en ce qu'**à la suite d'une expansion de l'ébauche (1) en un récipient (13), au moins une partie du moule de soufflage (34) est retirée hors du poste de soufflage (33) en même temps que le récipient (13) obtenu par soufflage, **en ce qu'**un contact continue à être maintenu entre cette partie du moule de soufflage (34) et le récipient (13) jusqu'à la fin d'une stabilité de contour du récipient (13), et **en ce qu'**au moins temporairement l'insert de fond (37) est soumis, ensemble avec le récipient (13), à un mouvement de rotation.

2. Procédé suivant la revendication 1, **caractérisé en ce que** l'insert de fond (37) est soumis à un refroidissement.

3. Procédé suivant la revendication 1 ou 2, **caractérisé en ce que** le récipient (13) est mis en contact avec l'insert de fond (37) par une aspiration résultant d'une dépression.

4. Procédé suivant l'une des revendications 1 à 3, **caractérisé en ce que** la dépression exerce son effet sur le récipient (13) dans le domaine d'une pluralité d'endroits de contact.

5. Procédé suivant l'une des revendications 1 à 4, **caractérisé en ce que** l'insert de fond (37) effectue au moins temporairement un mouvement de soulèvement, ensemble avec le récipient (13).

6. Procédé suivant l'une des revendications 1 à 5, **caractérisé en ce qu'**on fait effectuer à l'insert de fond (37) un mouvement de pivotement autour d'un axe à orientation essentiellement horizontale.

7. Procédé suivant l'une des revendications 1 à 5, **caractérisé en ce qu'**on fait effectuer à l'insert de fond (37) un mouvement de pivotement autour d'un axe à orientation essentiellement verticale.

8. Procédé suivant l'une des revendications 1 à 7, **caractérisé en ce que**, lors de la mise en oeuvre d'une tourelle de soufflage rotative (53), l'on fait parcourir au moins temporairement un mouvement de transport commun à un récipient (13) disposé à l'intérieur du poste de soufflage (33) au cours du processus de soufflage, et à un récipient (13) à refroidir disposé à l'extérieur du poste de soufflage (33) dans la zone de l'insert de fond (37).

9. Dispositif pour le moulage par soufflage de récipients (13) à partir d'une matière synthétique thermoplastique, dispositif qui comporte au moins un poste de soufflage (33) avec au moins un moule de soufflage (34), celui-ci étant constitué à partir d'au moins deux segments de moule de soufflage et d'un insert de fond (37), et dans lequel l'insert de fond (37) est agencé de manière à pouvoir être positionné par rapport aux segments de moule de soufflage, **caractérisé en ce que** l'insert de fond (37) est pourvu d'un dispositif de fixation du récipient (13) de telle manière que le récipient (13) peut être positionné au moins au cours d'un intervalle de fixation, ensemble avec l'insert de fond (37), par rapport au poste de soufflage (33), et **en ce que** l'insert de fond (37) est couplé avec une installation de pivotement.

10. Dispositif suivant la revendication 9, **caractérisé en ce que** l'insert de fond (37) est couplé à un refroidissement.

11. Dispositif suivant la revendication 9 ou 10, **caractérisé en ce que** l'insert de fond (37) se trouve en communication thermique avec des canaux d'un milieu de mise en équilibre de la température, qui sont prévus pour véhiculer un milieu de mise en équilibre de la température.

12. Dispositif suivant l'une des revendications 9 à 11, **caractérisé en ce que** l'insert de fond (37) est couplé à une installation d'aspiration.

13. Dispositif suivant la revendication 12, **caractérisé en ce qu'**une pluralité d'alésages d'aspiration sont aménagés dans la zone de l'insert de fond (37).

14. Dispositif suivant l'une des revendications 9 à 13, **caractérisé en ce que** l'insert de fond (37) est en liaison avec une installation de soulèvement (38).

15. Dispositif suivant l'une des revendications 9 à 14, **caractérisé en ce que** l'insert de fond (37) est aménagé de manière à pouvoir effectuer une translation par rapport au poste de soufflage (33).

16. Dispositif suivant l'une des revendications 9 à 15, **caractérisé en ce que** l'insert de fond (37) apte à être positionné est aménagé dans la zone d'une tourelle de soufflage (53) rotative.

17. Dispositif suivant l'une des revendications 9 à 15, **caractérisé en ce que** l'insert de fond (37) apte à être positionné est aménagé dans la zone d'un poste de soufflage (33) stationnaire.

18. Dispositif suivant l'une des revendications 9 à 17, **caractérisé en ce que** l'insert de fond (37) apte à être positionné est aménagé dans la zone d'un poste de soufflage (33) muni d'au moins deux cavités servant au soufflage simultané de plusieurs récipients.
